# EUROPEAN PATENT APPLICATION

(11) **EP 4 599 678 A2**
(43) Date of publication of application: **13.08.2025**
(21) Application number: 25156510.7
(22) Date of filing: 07.02.2025
(51) Int. Cl.: A01N 63/32, A01P 3/00

(54) **COMBINATIONS FOR CONTROLLING POST-HARVEST PATHOGENS IN AGRICULTURAL PRODUCTS AND METHOD OF USE THEREOF**

(30) Priority: 07.02.2024 US 202463551061 P
(71) Applicant: Decco Worldwide Post-Harvest Holdings B.V., 3196 KE Rotterdam (NL)
(72) Inventor: Koundal, Vikas, Washington, 98802 (US); Das, Kuntal, 400604 Maharashtra (IN)
(74) Representative: J A Kemp LLP

(57) **Abstract**

A post-harvest disease control combination comprising a) a biocontrol agent Candida oleophila; and (b) a synthetic fungicide for controlling and preventing post-harvest diseases in agricultural produce. A method of controlling the incidence of plant pathogens in agricultural produce is also disclosed herein.

## Description

### Technical field

The present invention relates to combinations of synthetic and biological agrochemicals for sustainably combating post-harvest diseases in agricultural produce and methods of use thereof. The present invention further relates to a method of controlling the incidence of plant pathogens in agricultural produce. More particularly, the present invention relates to a method of controlling and preventing post-harvest diseases in agricultural produce.

### Background and Prior art

Plant diseases and pests are a major threat to global food security. Fresh fruits and vegetables are extremely perishable commodities. More than one third of fruits and vegetables fail to reach to the customer due to infections caused by pathogens or due to decay or spoilage of produce after harvest. This leads to massive economic and social losses. This loss is greatly attributable to fungal and bacterial infections. Diseases caused by such infections are likely to appear in the field (i.e., pre-harvest), but also appear or affect the fruit post-harvest.

Farmers are largely dependent on synthetic fungicides to avoid food losses caused by fungal diseases. Several literatures are known in the art, which relate to the use of synthetic fungicides. For Example: EP2233000B1 relates to post harvest treatment using Bixafen. US11241010B2 relates to the use of succinate dehydrogenase inhibitors - Fluopyram and Trifloxystrobin for extending shelf life and storage stability of fruits and vegetables. However, overuse of these synthetic chemicals has resulted in the emergence of fungicide-resistant pathogens and concerns have been raised over the residual effects on the environment and human health.

In this regard, biocontrol agents (BCAs) have been proposed as an alternative to standard fungicides, but their disease management capacity is usually incomplete and heavily relies on uncontrollable environmental conditions. While, integrated approaches involving combining biocontrol agents (BCAs) with fungicides, to reduce the fungicide doses and to manage plant diseases and thereby their residue on harvested crops, are available as provided in *"*Combining Biocontrol Agents with Chemical Fungicides for Integrated Plant Fungal Disease Control, Lena Ons, Dany Bylemans, Karin Thevissen, and Bruno P. A. Cammue, PMID: 33291811, Microorganisms 2020, 8, 1930**.**

However, to allow its large-scale validation and implementation, further knowledge is needed, comprising timing, number and interval of repeated BCA applications as well as their compatibility and synergy with fungicides. The compatibility of BCAs with fungicides might differ when applied in a mixture or when used in alternation. To inhibit fungal pathogens, fungicides target different components or mechanisms of the fungal cell, including respiration, nucleic acid metabolism, cell membrane integrity, protein synthesis, signal transduction and cell mitosis. However, some fungicides perform these activities without distinguishing between harmful pathogens and non-target organisms such as beneficial micro-organisms in soil and living BCAs. As such, fungicides could impact the growth of BCAs or reduce their population size, making the biocontrol treatment ineffective. Therefore, knowledge of compatibility of synthetic fungicides with BCAs and the stability of such mixtures is crucial to allow combined applications. Thus, there is a need to develop compatible combinations comprising bio-control agents and synthetic fungicides to reduce waste due to the decay of agricultural produce in post-harvest and to reduce the residue of synthetic chemicals as well as actively contribute to resistance management.

Another typical problem which arises with such combinations is that, even if the biocontrol agent is compatible with synthetic fungicide, they may not always result in the desired effect. Combinations of biocontrol agents with synthetic fungicide may result in an additive effect or an antagonistic effect. Consequently, fungicides need to be carefully selected with a view to provide synergistic effect in disease control, effective resistance management and effective control of phytopathogenic harmful fungi and bacteria, at application rates which are as low as possible.

Several patent literatures relating to the combinations of biocontrol agents with synthetic fungicides are known. For Example: EP3019013B1 relates to synergistic compositions comprising a triazole compound and a biopesticide. AU2014233852B2 relate to synergistic compositions comprising a *Bacillus subtilis* strain and a biopesticide. WO02069720A2 relates to biopesticide compositions containing antagonistic microorganisms and stimulating agents selected from uronic acids, mannans, derivatives thereof and mixtures of said agents.

Accordingly, there is, therefore, an urgent need in the art to develop more synergistic combinations comprising biocontrol agents and synthetic fungicides that have advantageous properties such as being synergistic, aids in disease resistance management, reduces dosages of chemicals used, and enhances the shelf life of fruit and vegetables post-harvest. Use of biocontrol agents in conventional market has been identified as an opportunity for product expansion that can offer synthetic AI residue reduction or an additional resistance management tool.

### Object

It is an object of the present invention to provide novel synergistic combinations comprising a bio control agent- an Antagonistic yeast for the control and prevention of post-harvest infections in agricultural produce and to reduces dosages of chemicals used.

It is another object of the present invention to provide novel synergistic compositions comprising a bio control agent- an Antagonistic yeast for the control and prevention of post- harvest infections in agricultural produce and to reduces dosages of chemicals used.

It is yet another object of the present invention to provide a method for the control and prevention of fungal diseases in agricultural produce.

Particularly, it is an object of the present invention to provide a method for controlling and preventing pathogenic fungal diseases in fruits and vegetables.

### Summary

The present invention provides combinations, compositions for combating post-harvest diseases in agricultural produce and a method of controlling and preventing post-harvest diseases in agricultural produce.

The present invention provides a post-harvest disease control combination comprising an antagonistic yeast, a synthetic fungicide, for controlling and preventing post-harvest diseases in agricultural produce including cultivated plants, foliage, fruits, tubers and vegetables.

In an aspect, the present invention provides a post-harvest disease control combination comprising; (a) a biologically effective amount of an antagonistic yeast; (b) a synthetic fungicide selected from the group consisting of benzimidazoles, phenylpyrroles, imidazoles, anilino-pyrimidines, triazoles, copper and its salts, pyridine- carboxamides, methoxy- carbamates, thiophanates, pyrazole-4- carboxamides, their salts, esters and isomers thereof.

In another aspect, the antagonistic yeast species is *Candida oleophila.*

In yet another aspect, the present invention provides a post-harvest disease-control combination comprising, (a) a biocontrol agent *Candida oleophila;* and (b) a synthetic fungicide selected from the group consisting of benzimidazoles, phenylpyrroles, imidazoles, anilino-pyrimidines, triazoles, copper and its salts, pyridine- carboxamides, methoxy-carbamates, thiophanates, pyrazole-4- carboxamides.

In another aspect, *Candida oleophila* includes all strains of *C*. *oleophila,* mostly, *C*. *oleophila* strain O or *C*. *oleophila* I- 182.

In yet another aspect, the present invention provides a post-harvest disease control combination comprising (a) a bio control agent comprising *Candida oleophila;* (b) a synthetic fungicide selected from the group consisting of Azoxystrobin, Thiabendazole, Fludioxonil, Imazalil, pyrimethanil, propiconazole, Copper sulphate, copper oxychloride, boscalid, pyraclostrobin, thiophanate, fluxapyroxad.

In an aspect, the present invention provides a post-harvest disease control combination comprising biologically effective amount of *Candida oleophila* and thiabendazole.

In another aspect, the present invention provides a post-harvest disease control combination comprising biologically effective amount of *Candida oleophila* and fludioxonil.

In yet another aspect, the present invention provides a post-harvest disease control combination comprising biologically effective amount of *Candida oleophila* and Imazalil.

In an aspect, the present invention provides a post-harvest disease control combination comprising biologically effective amount of *Candida oleophila* and pyrimethanil.

In another aspect, the present invention provides a post-harvest disease control combination comprising biologically effective amount of *Candida oleophila* and propiconazole.

In yet another aspect, the present invention provides a post-harvest disease control combination comprising biologically effective amount of *Candida oleophila* and Copper sulphate.

In an aspect, the present invention provides a post-harvest disease control combination comprising biologically effective amount of *Candida oleophila* and Copper oxychloride.

In another aspect, the present invention provides a post-harvest disease control combination comprising biologically effective amount of *Candida oleophila* and boscalid.

In yet another aspect, the present invention provides a post-harvest disease control combination comprising biologically effective amount of *Candida oleophila* and Pyraclostrobin.

In a further aspect, the present invention provides a post-harvest disease control combination comprising biologically effective amount of *Candida oleophila* and Thiophanate.

In an aspect, the present invention provides a post-harvest disease control combination comprising biologically effective amount of *Candida oleophila* and fluxapyroxad.

In an aspect, the present invention provides a post-harvest disease-control composition comprising, (a) a biocontrol agent comprising *Candida oleophila;* and (b) a synthetic fungicide selected from the group consisting of benzimidazoles, phenylpyrroles, imidazoles, anilino- pyrimidines, triazoles, copper and its salts, pyridine- carboxamides, methoxy-carbamates, thiophanates, pyrazole-4- carboxamides.

In another aspect, the present invention provides a post-harvest disease control composition comprising (a) a bio control agent comprising *Candida oleophila;* (b) a synthetic fungicide selected from the group consisting of Azoxystrobin, Thiabendazole, Fludioxonil, Imazalil, pyrimethanil, propiconazole, Copper sulphate, copper oxychloride, boscalid, pyraclostrobin, thiophanate, fluxapyroxad.

In yet another aspect, the present invention provides a post-harvest disease control composition comprising biologically effective amount of *Candida oleophila* and thiabendazole.

In an aspect, the present invention provides a post-harvest disease control composition comprising biologically effective amount of *Candida oleophila* and fludioxonil.

In another aspect, the present invention provides a post-harvest disease control composition comprising biologically effective amount of *Candida oleophila* and pyrimethanil.

In yet another aspect, the present invention provides a post-harvest disease control composition comprising biologically effective amount of *Candida oleophila* and Imazalil.

In an aspect, the present invention provides a post-harvest disease control composition comprising biologically effective amount of *Candida oleophila* and pyrimethanil.

In another aspect, the present invention provides a post-harvest disease control composition comprising biologically effective amount of *Candida oleophila* and Propiconazole.

In yet another aspect, the present invention provides a post-harvest disease control composition comprising biologically effective amount of *Candida oleophila* and Copper Sulphate.

In an aspect, the present invention provides a post-harvest disease control composition comprising biologically effective amount of *Candida oleophila* and Copper Oxychloride.

In another aspect, the present invention provides a post-harvest disease control composition comprising biologically effective amount of *Candida oleophila* and Boscalid.

In yet another aspect, the present invention provides a post-harvest disease control composition comprising biologically effective amount of *Candida oleophila* and Pyraclostrobin.

In an aspect, the present invention provides a post-harvest disease control composition comprising biologically effective amount of *Candida oleophila* and thiophanate.

In another aspect, the present invention provides a post-harvest disease control composition comprising biologically effective amount of *Candida oleophila* and Fluxapyroxad.

In a further aspect, the present invention provides a method for controlling and preventing postharvest diseases in agricultural produce, comprising applying the post-harvest disease control combination or a composition comprising the said combination to agricultural produce.

In a yet another aspect, the method for controlling and preventing postharvest diseases in agricultural produce, comprises harvesting the agricultural produce, handling, sanitizing, cleaning, chemical treatment, coating the agricultural produce, packing, and storage of the agricultural produce.

In a further aspect, coating includes but not limited to polysaccharide-based coatings, biopolymers made from proteins from plants, animals, and microorganisms, Fatty acid derivatives such as carnauba wax, shellac, bee wax, plant oils, plant residues, animal residues, microorganism products, composite coating materials, Protein and lipid composite coatings, Composite coating containing growth regulators and plant extracts, biopolymer nanocomposite coatings, encapsulation, multi-layer coatings.

In an aspect, the method for combating post-harvest diseases in agricultural produce, comprising applying the post-harvest disease control combination or a composition comprising the said combination to agricultural produce; sanitizing the agricultural produce; applying a coating material to the agricultural produce, wherein the *Candida oleophila* and the synthetic fungicide comprised in the combination are either applied simultaneously or concurrently.

In another aspect, the method for combating post-harvest diseases in agricultural produce, comprises applying the biocontrol agent before the fungicide application.

In yet another aspect, the method for combating post-harvest diseases in agricultural produce, comprises applying the biocontrol agent after the fungicide application.

In a further aspect, the method for combating post-harvest diseases in agricultural produce, comprises applying the combination after sanitizing the agricultural produce.

In an additional aspect, the method for combating post-harvest diseases in agricultural produce, comprises applying the combination after applying the coating material to the agricultural produce.

In yet another aspect, the present invention provides use of the post-harvest disease control combination comprising *Candida oleophila* and a synthetic fungicide selected from the group consisting of benzimidazoles, phenylpyrroles, imidazoles, anilino-pyrimidines, triazoles, copper and its salts, pyridine- carboxamides, methoxy-carbamates, thiophanates, pyrazole-4- carboxamides for controlling and preventing post-harvest diseases.

### Detailed description:

The present invention relates to post-harvest disease control combinations, compositions, and methods to reduce the incidence and/or severity of fungal pathogens, and economic loss in agricultural produce.

The present invention further relates to methods of use of the post-harvest disease combinations and compositions comprising antagonistic yeast, articles including kits comprising those combinations, compositions, and methods of use.

For the purposes of the following detailed description, it is to be understood that the invention may assume various alternative variations and step sequences, except where expressly specified to the contrary. Moreover, other than in any operating examples, or where otherwise indicated, all numbers expressing, for example, quantities of materials/ingredients used in the specification are to be understood as being modified in all instances by the term "about". Thus, before describing the present invention in detail, it is to be understood that this invention is not limited to particularly exemplified systems or process parameters that may of course, vary.

It is also to be understood that the terminology used herein is for the purpose of describing particular embodiments of the invention only and is not intended to limit the scope of the invention in any manner. The use of examples anywhere in this specification including examples of any terms discussed herein is illustrative only, and in no way limits the scope and meaning of the invention or of any exemplified term.

It must be noted that, as used in this specification, the singular forms "a," "an" and "the" include plural referents unless the content clearly dictates otherwise. The terms "preferred" and "preferably" refer to embodiments of the invention that may afford certain benefits, under certain circumstances.

As used herein, the terms "comprising" "including," "having," "containing," "involving," and the like are to be understood to be open-ended, i.e., to mean including but not limited to. The term `fungicide or fungicidal' refers to pesticides that kill or prevent the growth of fungi and their spores in agriculture.

The term 'disease control' as used herein denotes control and prevention of a disease. Controlling effects include all deviation from natural development, for example: killing, retardation, decrease of the fungal disease.

The term `antagonistic yeast' refers to yeast having anti-fungal, anti-bacterial, anti-insecticidal and anti-viral activity. It may be noted that references to yeast also include references to antagonistic yeast, and such terms may be used interchangeably for the purposes of the present invention.

The term 'plants' refers to all physical parts of a plant, including seeds, seedlings, saplings, tubers, stems, stalks, foliage and fruits.

The term "agricultural produce" as used herein refers to any produce out of cultivation of plants including cultivated plants, foliage, fruits, tubers and vegetables. The term "plant propagation material" is understood to denote generative parts of a plant, such as seeds, vegetative material such as cuttings or tubers, roots, fruits, tubers, bulbs, rhizomes and parts of plants, germinated plants and young plants which are to be transplanted after germination or after emergence from the soil. These young plants may be protected before transplantation by a total or partial treatment by immersion.

The term "agriculturally acceptable amount of active" refers to an amount of an active that kills or inhibits the plant disease for which control is desired, in an amount not significantly toxic to the plant being treated.

The term `biologically effective amount' refers to the amount of the biological component used to inhibit, reduce or stunt the occurrence of infections in agricultural practices.

"Pome fruit", as used in this specification includes, but is not limited to, apples, pears and quinces.

As used herein, colony forming unit (cfu) is a unit which estimates the number of microbial cells, i.e. cells of *Candida oleophila* that are viable in an application sample.

As used herein, the term metric ton or tonne is a unit of mass, and it is defined as 1,000 kilograms. The said terms are used interchangeably.

"Compatibility" as used herein the specification, means how well a fungicide mixes with other substances. It's important to know how two formulations interact with other to avoid problems like reduced effectiveness or increased toxicity and herein measured by the unaffected colony count of biocontrol agent upon mixing with chemical fungicides.

Each of the aspects described above may have one or more embodiments. Each of the embodiments described hereinafter may apply to one or all of the aspects described hereinabove. These embodiments are intended to be read as being preferred features of one or all of the aspects described hereinabove. Each of the embodiments described hereinafter applies to each of the aspects described hereinabove individually.

The inventors of the present invention have unexpectedly found that contacting agricultural produce or harvest with a post-harvest disease control combination or a composition comprising, (a) a biocontrol agent *Candida oleophila;* and (b) a synthetic fungicide selected from the group consisting of benzimidazoles, phenylpyrroles, imidazoles, anilino-pyrimidines, triazoles, copper and its salts, pyridine- carboxamides, methoxy-carbamates, thiophanates, pyrazole-4- carboxamides resulted in considerable reduction in the occurrence of fungal decay in said agricultural produce.

More particularly, the inventors of the present invention observed that contacting fruits with the said post-harvest disease control combination or composition resulted in significant reduction in fungal decay and in loss of harvest, therefore contributing to the reduction in economic losses. The rationale of the present invention is to test synergy of biocontrol agents with conventional post and preharvest fungicides.

The present invention provides a post-harvest disease control combination comprising a) a biocontrol agent *Candida oleophila;* and (b) a synthetic fungicide selected from the group consisting of benzimidazoles, phenylpyrroles, imidazoles, anilino-pyrimidines, triazoles, copper and its salts, pyridine- carboxamides, methoxy-carbamates, thiophanates, pyrazole-4- carboxamides, for controlling and preventing post-harvest diseases in agricultural produce including cultivated plants, foliage, fruits, tuber and vegetables.

In an embodiment, the present invention provides a post-harvest disease control combination comprising *Candida oleophila* and Benzimidazole.

In another embodiment, the present invention provides a post-harvest disease control combination comprising *Candida oleophila* and Phenylpyrrole.

In yet another embodiment, the present invention provides a post-harvest disease control combination comprising *Candida oleophila* and Imidazole.

In an embodiment, the present invention provides a post-harvest disease control combination comprising *Candida oleophila* and Anilino-pyrimidine.

In another embodiment, the present invention provides a post-harvest disease control combination comprising *Candida oleophila* and Triazole.

In yet another embodiment, the present invention provides a post-harvest disease control combination comprising *Candida oleophila* and Copper and its salts.

In an embodiment, the present invention provides a post-harvest disease control combination comprising *Candida oleophila* and Pyridine-carboxamide.

In another embodiment, the present invention provides a post-harvest disease control combination comprising *Candida oleophila* and Methoxy carbamate.

In yet another embodiment, the present invention provides a post-harvest disease control combination comprising *Candida oleophila* and Thiophanate.

In an embodiment, the present invention provides a post-harvest disease control combination comprising *Candida oleophila* and Pyrazole-4- carboxamide.

In a preferred embodiment, the biocontrol agent and synthetic fungicide of the combination of present invention is applied in dosage ratio of 1:0.1 to 1:15. In an aspect, the dosage of synthetic fungicide is 0.1 to 15 times higher than the dosage of biocontrol agent.

In a preferred embodiment, the biocontrol agent and synthetic fungicide of the combination of present invention is preferably applied in dosage ratio of 1:0.5 to 1:13.

In a preferred embodiment, the dosage of synthetic fungicide is 0.5 to 13 times higher than the dosage of biocontrol agent.

In an embodiment, the present invention provides a combination comprising *Candida oleophila* and benzimidazole applied in dosage ratio of 1:0.5 to 1:3. In an embodiment, the dosage of benzimidazole is 0.5 to 3 times higher than the application dosage of *Candida oleophila.*

In an embodiment, the present invention provides a combination comprising *Candida oleophila* and phenylpyrrole applied in dosage ratio of 1:1 to 1:2.5. In an embodiment, the dosage of phenylpyrrole is 1 to 2.5 times higher than the application dosage of *Candida oleophila.*

In an embodiment, the present invention provides a combination comprising *Candida oleophila* and imidazole applied in dosage ratio of 1:1 to 1:12.5. In an embodiment, the dosage of imidazole is 1 to 12.5 times higher than the application dosage of *Candida oleophila.*

In an embodiment, the present invention provides a combination comprising *Candida oleophila* and anilino-pyrimidines applied in dosage ratio of 1:1 to 1:2.5. In an embodiment, the dosage of anilino-pyrimidines is 1 to 2.5 times higher than the application dosage of *Candida oleophila.*

In an embodiment, the present invention provides a combination comprising *Candida oleophila* and triazole applied in dosage ratio of 1:0.5 to 1:3.5. In an embodiment, the dosage of triazole is 0.5 to 3.5 times higher than the application dosage of *Candida oleophila.*

In an embodiment, the present invention provides a combination comprising *Candida oleophila* and strobilurin applied in dosage ratio of 1:1 to 1:8. In an embodiment, the dosage of strobilurin is 1 to 8 times higher than the application dosage of *Candida oleophila.*

In an embodiment, the present invention provides a post-harvest disease control combinations/compositions for controlling and preventing post-harvest diseases in agricultural produce including cultivated plants, foliage, fruits, tubers and vegetables.

In an embodiment, *Candida oleophila* is in a concentration from 0.1 to 5% w/v of the combination.

In a preferred embodiment, *Candida oleophila* is in a concentration from 0.1 to 3% w/v of the combination.

In an embodiment, *Candida oleophila* strain O is in a concentration from 0.1 to 5% w/v of the combination.

In a preferred embodiment, *Candida oleophila* strain O is in a concentration from 0.1 to 3% w/v of the combination.

In an embodiment, the biologically effective amount of *Candida oleophila* is from 0.1×10¹ cfu/g to 5 ×10¹⁵ cfu/g of the combination.

In an embodiment, the biologically effective amount of *Candida oleophila* is from 0.5×10¹⁰ cfu/g to 5 ×10¹⁰ cfu/g of the combination.

In a preferred embodiment, the biologically effective amount of *Candida oleophila* is from 1×10¹⁰ cfu/g to 4×10¹⁰ cfu/g of the combination.

In a preferred embodiment, the biologically effective amount of *Candida oleophila* is 3×10¹⁰ cfu/g of the combination.

In an embodiment, the concentration of active ingredient in synthetic fungicide formulation is from 5% to 70% of the total weight of the combination

In another embodiment, the concentration of active ingredient in synthetic fungicide formulation is from 10% to 50% of the total weight of the combination

In a preferred embodiment, the concentration of active ingredient in synthetic fungicide formulation is from 20% to 45% of the total weight of the combination.

In an embodiment, Candida oleophila includes all strains of C. *oleophila,* mostly, C. *oleophila* strain O or C. *oleophila* I- 182.

In a preferred embodiment, Candida oleophila strains is C. *oleophila* strain O.

In an embodiment, the post-harvest disease control combination further comprises an agriculturally acceptable excipient.

The composition further comprises a nutritional support or a carrier for the growth and maintenance of the activity of *Candida oleophila,* such a support is selected from gluconate or lactate salts.

In an embodiment, the fruits are selected from the species of apples, berries, peach, citrus, grapes, kiwi, nectarines, banana and pome.

In an embodiment, the cultivated plants, in particular the kind of tomato and pepper, as well as flowers and other ornamental plants.

The fungal pathogens can infect either through an mechanical wound or naturally. Such pathogens may include but *are not limited to the species of Botrytis cinerea, Penicillium expansum, P. digitatum, P. italicum, and*/*or Rhizopus spp, Phacidiopycnis washingtonsis*, *Sphaeropsis pyriputrescens*, *Neofabrea sp, Mucor pyriformis.*

The diseases treated by the combinations and compositions of the present invention are as follows:
Diseases of citrus: scab (*Elsinoe fawcetti*), penicillium rot (*Penicillium digitatum, P.italicum*)*,* and brown rot (*Phytophthora parasitica, Phytophthora citrophthora*)*.*
**Diseases of apple:** blossom blight (*Monilinia mali*)*,* scab (*Venturia inaequalis*)*,* bitter rot (*Colletotrichum acutatum*)*,* crown rot (*Phytophtora cactorum*)*,* blotch (*Diplocarpon mali*)*.*
Diseases of pear: scab (*Venturia nashicola, V. pirina*)*,* and phytophthora fruit rot *(Phytophtora cactorum).*
Diseases of peach: brown rot (*Monilinia fructicola*)*,* scab (*Cladosporium carpophilum*)*,* and phomopsis rot (*Phomopsis sp.).*
Diseases of grape: anthracnose *(Elsinoe ampelina),* ripe rot (*Glomerella cingulata),* black rot *(Guignardia bidwellii),* and botrytis.
**Diseases of persimmon:** anthracnose (*Gloeosporium kaki).*
**Diseases of strawberry:** grey mold (*Botrytis cinerea*)*,* and anthracnose *(Glomerella cingulata).*
**Disease of banana:** anthracnose (*Colletotrichun spp.*)

In an embodiment, the post-harvest disease control composition is formulated for application to surface of agricultural produce, soil, seeds, plant propagation material, whole plants or plant parts including, but not limited to, roots, tubers, stems, flowers, leaves and the vascular system.

In an embodiment, the composition is formulated for application to the surface of agricultural produce including fruits, vegetables and tubers.

In a preferred embodiment, the composition is formulated to be suitable for surface treatment of post-harvest produce.

The materials and the quantities thereof can be determined by an agricultural and/or microbiological scientist having the benefit of the subject disclosure.

In an embodiment, the present invention provides a method of controlling and/or preventing post-harvest fungal infections in agricultural produce, the method comprising: applying agricultural produce with a post-harvest disease control combination or a composition comprising *Candida oleophila* and a synthetic fungicide selected from the group consisting of benzimidazoles, phenylpyrroles, imidazoles, anilino-pyrimidines, triazoles, copper and its salts, pyridine- carboxamides, methoxy-carbamates, thiophanates, pyrazole-4- carboxamides

In an embodiment, the step of applying the post-harvest-control composition comprises cold fogging, spraying the combination on fruits in storage containers or during post-harvest handling procedures, immersing the agricultural produce in a dip tank comprising the post- harvest disease control composition, and such other procedures for a specific interval of time.

In an embodiment, the method of controlling and/or preventing post-harvest fungal infections in agricultural produce comprises immersing the agricultural produce in a dip tank comprising a post-harvest disease control combination or composition comprising *Candida oleophila* and a synthetic fungicide.

Accordingly, the dip tanks have a capacity of holding 5L to 20L of the post-harvest disease control composition.

In an embodiment, the step of immersing the agricultural produce in a dip tank comprising a post-harvest disease control composition, is carried out for a period of 5 seconds to 20 minutes.

In an embodiment, *Candida oleophila* is applied in a biologically effective amount ranging from 0.1 g/ L to 10 g/L.

In a preferred embodiment, *Candida oleophila* is applied in a biologically effective amount ranging from 0.33 g/ L to 5 g/L.

In another embodiment, *Candida oleophila* is applied at an application rate of 0.1 g/ L to 10 g/L.

In an embodiment, the synthetic fungicide is applied at an application rate of 0.1 g/ L to 150 g/L.

In a preferred embodiment, the synthetic fungicide is applied at an application rate of 0.1 g/ L to 100 g/L.

In another embodiment, the synthetic fungicide is applied in an amount ranging from 0.1 ml/ L to 100 ml/L.

In an embodiment, the synthetic fungicide is applied in an amount ranging from 0.1 ml/ L to 50 ml/L.

In an embodiment, the synthetic fungicide is applied in an amount ranging from 0.1 ml/ L to 20 ml/L.

In a preferred embodiment, the synthetic fungicide is applied in an amount ranging from 0.5 ml/ L to 13 ml/L.

In another embodiment, the biocontrol agent and the synthetic fungicide is formulated in solvent prior to use as a combination.

In an embodiment, the agricultural produce is treated with the combination of the present invention and optionally could be subjected to drying. The drying process can take place by passing agricultural produce on a conveyor belt or on transferrable trays in a drying tunnel.

In an embodiment, the present invention provides use of a post-harvest disease control combination or composition comprising *Candida oleophila* and a synthetic fungicide for controlling post-harvest diseases in agricultural produce.

In an embodiment, the present invention provides use of a post-harvest disease control combination or composition comprising *Candida oleophila* and a synthetic fungicide for controlling postharvest diseases in fruits.

In an embodiment, the present invention provides use of a post-harvest disease control combination or composition comprising *Candida oleophila* and a synthetic fungicide for controlling postharvest diseases in pome fruits.

According to an embodiment of the present disclosure, the various components of the post-harvest disease control composition can be used individually or already partially or completely mixed with one another to prepare the composition according to the invention. It is also possible for them to be packaged and used further as combination composition such as a kit of parts.

In another aspect, the compositions may be presented in the form of a multi-pack fungicidal product or as a kit-of-parts for controlling target fungi.

It will be understood that the specification and examples are illustrative but not limitative of the present disclosure and that other embodiments within the spirit and scope of the invention will suggest themselves to those skilled in the art. Other embodiments can be practiced that are also within the scope of the present invention.

### EXAMPLES

The disclosure will be illustrated with reference to the following examples:
**Compatibility of biocontrol agent:** *Candida oleophila strain* O was tested with various preharvest and post-harvest fungicides to test if they have any negative effect on *Candida oleophila* strain activity. The dry mass of a single *Candida oleophila* cell, including strain O, is approximately 47.65 picograms (pg) (48pg = 48×10⁻⁹mg), which is a typical mass for a single yeast cell.

However, the exact mass can vary depending on the specific growth conditions and cell size as provided in https://joumals.plos.org/plosone/article?id=10.1371/journal.pone.0188388#:~:text=The%2 0single%20yeast%20cell%20dry,is%2047.65%20%C2%B1%201.05%20pg.

### Preparation and compatibility tests on Solid Medium:

1 gram of biomass (10¹⁰cfu/gm) was activated in 100 ml of water for 45 minutes. 1ml of the biomass suspension was mixed with 99ml of lactate dilution (2g calcium lactate diluted in 99 ml water). Biomass solution was further diluted to 100 and 1000 folds and 100µl of the diluted biomass solution was plated on synthetic fungicide amended PDA (Potato dextrose agar) plates, which yields around 10³ and 10² cfu/plate, respectively, in fully compatible mixtures. Plates were incubated at 23°C and the growth of CFUs (colony forming units) and total number of *Candida oleophila* colonies were counted after 5-7 days.

Pesticide amended PDA plates were prepared by inoculating pesticide on a Potato dextrose agar plate at no treatment (control), standard (full dose) and reduced (half dose) depending on the treatments. For e.g., if a pesticide has standard dose concentration of 5 ppm, then plates were prepared at 0 ppm, 2.5 ppm and 5 ppm. with that pesticide.

The fungicide and biocontrol agent were also tested as tank mix partners and similar results were obtained.

**Table 1: Compatibility of Candida Oleophila with Synthetic Fungicides:**

| Biocontrol Agent (BA) | Strength of BA (dosage) | Active Ingredient (a.i.) of synthetic fungicide | Strength of a.i. in synthetic fungicide | Tested dosage of syntetic fungicide | Compatibility |
|---|---|---|---|---|---|
| *Candida oleophila strain o* | 10² cfu/ml - 10³ cfu/ml | Copper sulphate | 200 g/kg | 5 ppm | YES |
| *Candida oleophila strain o* | 10² cfu/ml - 10³ cfu/ml | Copper oxychloride | 658 g/kg | 5 ppm | YES |
| *Candida oleophila strain o* | 10² cfu/ml - 10³ cfu/ml | Thiophanate -methyl | 700 g/kg | 0.5 - 2 ppm | YES |
| *Candida oleophila strain o* | 10² cfu/ml - 10³ cfu/ml | Boscalid | 700 g/kg | 0.75 - 3 ppm | YES |
| *Candida oleophila strain o* | 10² cfu/ml - 10³ cfu/ml | Fluxapyroxad | 300 g/L | 0.5 - 2 ppm | YES |
| *Candida oleophila strain o* | 10² cfu/ml - 10³ cfu/ml | Fluxapyroxad | 300 g/L | 0.9ppm | YES |
| *Candida oleophila strain o* | 10² cfu/ml - 10³ cfu/ml | Pyraclostrobin | 250 g/L | 2 - 8 ppm | YES |
| *Candida oleophila strain o* | 10² cfu/ml - 10³ cfu/ml | Pyraclostrobin | 200 g/kg | 0.5ppm | YES |
| *Candida oleophila strain o* | 10⁶ cfu/ml | Fludioxonil | 500 g/kg | 500 ppm | YES |
| | | | | 700 ppm | |
| *Candida oleophila strain o* | 10⁶ cfu/ml | Pyrimethanil | 600g/L | 800 ppm | YES |
| *Candida oleophila strain o* | 10⁶ cfu/ml | Thiabendazole | 500 g/L | 200 ppm | YES |

As is evident from the above table 1, *Candida oleophila* strain O was found to be compatible with pre harvest fungicides such as Copper sulphate, Copper oxychloride, Thiophanate-methyl, Boscalid, Fluxapyroxad, Pyraclostrobin, Fludioxonil, Pyrimethanil and Thiabendazole.

Subsequently, commercial trials were also conducted during the Pome harvest season of 2022, to validate these lab findings and similar results were obtained.

### Example 1:

### EFFICACY AND SYNERGY DATA:

Several lab trials were conducted to test efficacy of *Candida oleophila strain* O against major post-harvest pathogens of pome (Blue mold: *Penicillium expansum,* Gray mold: *Botrytis cinerea,* Bull's eye rot: *Neofabraea perennans* and Mucor rot and to test synergistic interaction of *Candida oleophila strain* O with 3 post-harvest fungicides of pome fruits namely Fludioxonil (FDL), Pyrimethanil (PYR) and Thiabendazole (TBZ).

*Candida oleophila strain* O was applied solo and in combination with three different post-harvest fungicides at full rate (FR) and half label rate (HR) (for conventional fungicides) to study its compatibility and synergist interaction. Testing was done on artificially/lab inoculated and naturally infected fruits.

For artificial inoculations through wound, washed fruits were wounded twice at the stem end region and were kept for 30 mins to dry the juice from the wound site. Fruits were fully submerged in fungicide solutions for 1 min and then transferred to a perforated basket to drip dry. Fruits were the transferred to the fruit trays and were left to dry overnight. 5×10⁴ fungal spores/mL spore suspension of post-harvest pathogens as indicated above was prepared for inoculation. 50 µL spore suspension was transferred in each wound using a pipette and was left to dry for 1 hr at room temperature. Fruits were stored in cold storage. Fruit decay was monitored periodically, when decay on control fruit was above 80%, the disease incidence and severity was evaluated on all the treatments.

Artificial inoculations:
- *Candida oleophila strain* O when applied alone controlled blue mold and bull's eye rot.
- *Candida oleophila strain* O when mixed with ½ label rate of FDL, PYR or TBZ synergistically reduced bull's eye rot and Mucor rot.

Table 2-4 clearly shows the synergistic effect of *Candida oleophila strain O,* when applied in combination with three post-harvest fungicides of pome fruits namely Fludioxonil (FDL), Pyrimethanil (PYR) and Thiabendazole (TBZ) on Fuji apples.

**Table 2: Candida Oleophila strain O + Thiabendazole (TBZ)**

| **Trial** | | | **Decay severity (%)** | | |
|---|---|---|---|---|---|
| **(Artificial inoculations)** | | | **Apple variety-Fuji** | | |
| **Treatments** | **%age A.I** | **Rate** | ***Penicillium sp.*** | ***Neofabrea sp,*** | ***Mucor sp.*** |
| Control | - | - | 94 | 98 | 100 |
| TBZ (FR) | 42.3% | 1.45 g/L | 4 | 22 | 100 |
| *C. Oleophila strain O* (FR) | 57% | 0.33 g/L | 79 | 91 | 81 |
| *C. Oleophila strain O* (DR) | 57% | 0.66 g/L | 82 | 90 | 100 |
| *C. Oleophila strain O* (FR) + TBZ (half rate) | 57% + 42.3% | 0.33 g/L + 0.72g/L | 0 | 4 | 35 |

| | | | | | |
|---|---|---|---|---|---|
| FR= Full rate, A.I= Active ingredient, DR=Double rate | | | | | |

**Table 3: Candida Oleophila strain O + Pyrimethanil (PYR)**

| **Trial** | | | **Decay severity (%)** | | | |
|---|---|---|---|---|---|---|
| **(Artificial inoculations)** | | | **Apple variety-Fuji** | | | |
| **Treatments** | **%age A.I** | **Rate** | ***Penicillium sp.*** | ***Botrytis sp.*** | ***Neofabrea sp,*** | ***Mucor sp.*** |
| Control | - | - | 94 | 47 | 98 | 100 |
| PYR | 37.3% | 1.35 g/L | 7 | 7 | 70 | 100 |
| *C. Oleophila strain O* (FR) | 57% | 0.33 g/L | 79 | 28 | 91 | 81 |
| *C. Oleophila strain O* (DR) | 57% | 0.66 g/L | 82 | 30 | 90 | 100 |
| *C. Oleophila strain O* (FR) + PYR (half rate) | 57% + 37.3% | 0.33 g/L + 0.67 g/L | 0 | 2 | 13 | 47 |

| | | | | | | |
|---|---|---|---|---|---|---|
| FR= Full rate, A.I= Active ingredient, DR=Double rate | | | | | | |

**Table 4: Candida Oleophila strain O + Fludioxonil (FDL)**

| **Trial** | | | **Decay severity (%)** | | | |
|---|---|---|---|---|---|---|
| **(Artificial inoculations)** | | | **Apple variety-Fuji** | | | |
| **Treatments** | **%age A.I** | **Rate** | ***Penicillium*** | ***Botrytis*** | ***Nefabrea*** | ***Mucor*** |
| Control | - | - | 94 | 47 | 98 | 100 |
| FDL | 50% | 0.85 g/L | 0 | 2 | 83 | 100 |
| *C. Oleophila strain O* (FR) | 57% | 0.33 g/L | 79 | 28 | 91 | 81 |
| *C. Oleophila strain O* (DR) | 57% | 0.66 g/L | 82 | 30 | 90 | 100 |
| *C. Oleophila strain O* (FR) + FDL (half rate) | 57% + 50% | 0.33 g/L + 0.42 g/L | 0 | 1 | 2 | 0 |

| | | | | | | |
|---|---|---|---|---|---|---|
| FR= Full rate, A.I= Active ingredient, DR=Double rate | | | | | | |

As demonstrated in the tables above, the combination of *Candida Oleophila* and synthetic fungicides significantly reduced the incidence of post-harvest pathogens, even when the synthetic fungicides were applied at half their usual rate

### Natural infection:

The overall disease incidence reduced from 32.5% to 5%. Candida treatment reduced the blue mold *(Penicillium expansum)* incidence from 30% in the control to 0% in Candida treated fruits.

**Table 5**

| **Trial** | | | | **Decay severity (%)** | | |
|---|---|---|---|---|---|---|
| **(Natural infection)** | | | | **Apple variety-Fuji** | | |
| Treatments | AI | AI % | Rate | *Penicillium sp.* | *Botrytis sp.* | Total severity |
| Control | - | - | - | 30 | -- | 32.5 |
| *C*. *Oleophila strain O* | Candida (FR) | 57% | 0.33 g/L | 0 | -- | 5 |

The results indicate that using a combination of a biocontrol agent with synthetic fungicides at half the usual/ full application rate achieves similar disease control as using synthetic fungicides at their full rate. This approach allows for a reduction in the amount of synthetic fungicides used while maintaining effective disease control.

## Claims

1. A combination for combating post-harvest diseases in agricultural produce, said combination comprising:
(a) a biologically effective amount of *Candida oleophila as* bio-control agent; and
(b) at least one synthetic fungicide selected from the group consisting of benzimidazoles, phenylpyrroles, imidazoles, anilino-pyrimidines, triazoles, copper and its salts, pyridine- carboxamides, methoxy-carbamates, thiophanates, pyrazole-4-carboxamides, their salts, esters and isomers thereof.

2. The combination as claimed in claim 1, wherein at least one synthetic fungicide is selected from thiabendazole, fludioxonil, Imazalil, pyrimethanil, propiconazole, copper sulphate, copper oxychloride, boscalid, pyraclostrobin, thiophanate, fluxapyroxad, their salts, esters and isomers thereof.

3. The combination as claimed in claim 1, wherein the agricultural produce is selected from fruits, tubers and vegetables.

4. The combination as claimed in claim 1, wherein the *Candida oleophila* and at least one synthetic fungicide are present in a dose ratio of 1:0.1 to 1:15.

5. The combination as claimed in claim 1, wherein the biologically effective amount of *Candida oleophila* is 0.1×10¹ cfu/g to 5 ×10¹⁵ cfu/g of the combination.

6. A method of combating post-harvest diseases in agricultural produce, said method comprising applying to the agricultural produce the combination as claimed in claim 1; sanitizing the agricultural produce, applying a coating material to the agricultural produce, wherein the *Candida oleophila* and the synthetic fungicide comprised in the combination are either applied simultaneously or concurrently.

7. The method as claimed in claim 6, wherein said method comprises applying the biocontrol agent before the fungicide application.

8. The method as claimed in claim 6, wherein said method comprises applying the biocontrol agent after the fungicide application.

9. The method as claimed in claim 6, wherein the combination is applied after sanitizing the agricultural produce.

10. The method as claimed in claim 6, wherein the combination is applied after applying the coating material to the agricultural produce.

11. The method as claimed in claim 6, wherein the *Candida oleophila* is applied at an application rate of 0.1 g/ L to 10 g/L.

12. The method as claimed in claim 6, wherein the fungicide is applied at an application rate of 0.1 g/ L to 150 g/L.

13. Use of a combination as claimed in claim 1, for controlling post-harvest diseases in agricultural produce.
